# EUROPEAN PATENT SPECIFICATION

(11) **EP 2 306 483 B1**
(45) Date of publication and mention of the grant of the patent: **11.05.2016**
(21) Application number: 09799923.9
(22) Date of filing: 06.07.2009
(51) Int. Cl.: H01H 37/52, H01H 37/54, H01H 37/72, F24H 9/20, A47J 27/21

(54) **AN OVERHEAT PROTECTION CONTROL UNIT FOR LIQUID HEATER**
ÜBERHITZUNGSSCHUTZ-STEUEREINHEIT FÜR EINEN FLÜSSIGKEITSERHITZER
UNITÉ DE COMMANDE ANTI-SURCHAUFFE POUR SYSTÈME DE CHAUFFAGE DE LIQUIDE

(30) Priority: 19.07.2008 CN 200810120107
(43) Date of publication of application: 06.04.2011
(73) Proprietor: Zhejiang Jiatai Electrical Appliance Co., Ltd, Zhejiang 325608 (CN)
(72) Inventor: Yang, Qiang, Yueqing Zhejiang 325608 (CN); Zheng, Hesheng, Yueqing Zhejiang 325608 (CN)
(74) Representative: Sun, Yiming
(86) International application number: PCT/CN2009/000758
(87) International publication number: WO 2010/009607

(56) References cited:
- EP-A2- 1 797 799
- CN-Y- 2 423 834
- CN-Y- 201 229 506
- DE-A1- 4 006 903
- DE-U1- 20 320 019
- US-A- 4 035 756

## Description

### FIELD OF THE INVENTION

The present invention relates to an overheat protection control means, and more particularly, to an overheat protection controller assembly of a liquid heating vessel.

### BACKGROUND OF THE INVENTION

The existing overheat protection control means (also called boil-dry protection control means) of liquid heating vessels are mostly used and mounted under the bases of liquid heating vessels, especially water boiling vessels, the base of each said vessel is provided with an electrical heating element. There are mainly two types of such overheat protection control means: one type provided with only one thermal sensitive bimetal actuator, and the other type provided with two thermal sensitive bimetal actuators. Because the first type has only one actuator, if it goes wrong or fails to operate, the heating vessel is easy to boil dry and overheat and then be burned out. On the other hand, because the two actuators of the second type are made of different materials, the two actuators will operate at different temperatures, the actuator operable at a higher temperature will produce an actuation movement so as to overheat and burn out the heating vessel when the temperature of the heating vessel is too high, while the actuator operable at a lower temperature is easy to produce an actuation movement so as to influence the normal use of the heating vessel when the temperature of the heating vessel is not high. An example of overheat control means is disclosed in US-A-4035756.

### SUMMARY OF THE INVENTION

An object of the present invention is to provide an overheat protection controller assembly of a liquid heating vessel, characterized by reliable overheat protection and accurate and consistent actuations.

In order to achieve the above object, technical solutions are provided as claimed in claims 1 and 8.

In the technical solution of claim 1, the monolithic conjoined double-actuating thermal sensitive bimetal actuator may be mounted on the control body via a central mount point of each said actuating unit, the periphery of each said actuating unit kicks downwards to produce an actuation movement on an overheat condition; and two groups of switch contacts are further arranged on the control body correspondingly, each group of the switch contacts cooperate with the periphery of a corresponding actuating unit, and a downward actuation movement of the periphery of any of the actuating units will open a corresponding group of the switch contacts and cut off the power supply of the heater of the liquid heating vessel.

In the technical solution of claim 8, the monolithic conjoined double-actuating thermal sensitive bimetal actuator may be mounted on the control body via a peripheral mount point of each said actuating unit, the center of each said actuating unit kicks downwards to produce an actuation movement on an overheat condition; and two groups of switch contacts are further arranged on the control body correspondingly, each group of the switch contacts cooperate with the center of a corresponding actuating unit, and a downward actuation movement of the center of any of the actuating units will open a corresponding group of the switch contacts and cut off the power supply of the heater of the liquid heating vessel.

In the above technical solutions, the thermal sensitive actuator mounted on the control body and cooperating with the switch contacts is a monolithic conjoined double-actuating thermal sensitive bimetal actuator, which functionally provides a reliable dual-overheat protection since it comprises two actuating units. Meanwhile, since the two actuating units form the monolithic conjoined double-actuating thermal sensitive bimetal actuator via the common join part at the inner side of each unit's closed outline perimeter on the same bimetal sheet, the materials of the two actuating units will be highly consistent, i.e. they may produce actuation movements at the same accurate temperature point; moreover, since the two actuating units are integrated in a single body, it is convenient to assemble them and the assembly efficiency of the controller assembly can be improved as well. On the premise of reliable overheat protection, a controller assembly with such structures may be designed to be more compact to thereby save materials, and a compact heating vessel with reliable overheat protection can be produced. Because the common join part of the monolithic conjoined double-actuating thermal sensitive bimetal actuator is not only a portion of this actuating unit but also a portion of the other one, namely, the two actuating units have a common portion, it's easier for the two actuating units of the monolithic conjoined double-actuating thermal sensitive bimetal actuator to produce actuation movements at the same temperature point on the premise that each of the two actuating units wholly produces an actuation movement independently.

### BRIEF DESCRIPTION OF THE DRAWINGS

FIG. 1 is a view showing the 3D structure of a first overheat protection controller assembly of a liquid heating vessel.
FIG. 2 is a view showing the 3D structure of a second overheat protection controller assembly of a liquid heating vessel.
FIG. 3 is a view showing the 3D structure of a third overheat protection controller assembly of a liquid heating vessel.
FIG. 4 is a first plan view of the monolithic conjoined double-actuating thermal sensitive bimetal actuator having a common join part according to the present invention.
FIG. 5 is a second plan view of the monolithic conjoined double-actuating thermal sensitive bimetal actuator having a common join part according to the present invention.
FIG. 6 is a third plan view of the monolithic conjoined double-actuating thermal sensitive bimetal actuator having a common join part according to the present invention.

### DETAILED DESCRIPTION OF THE PREFERRED EMBODIMENT

The invention is further described in detail hereinafter, by way of example, with reference to the drawings.

Wherein: 1. control body; 2. monolithic conjoined double-actuating thermal sensitive bimetal actuator; 3. outer kick limb; 4. internal tongue; 5. tongue root; 6. switch contact; 7 push rod; 8. retaining plate; 9. hole for internal tongue; 10. rivet; 11. actuating unit's closed outline perimeter, 12. common join part; 13. mounting hole; and 14. unit outer auxiliary connection part.

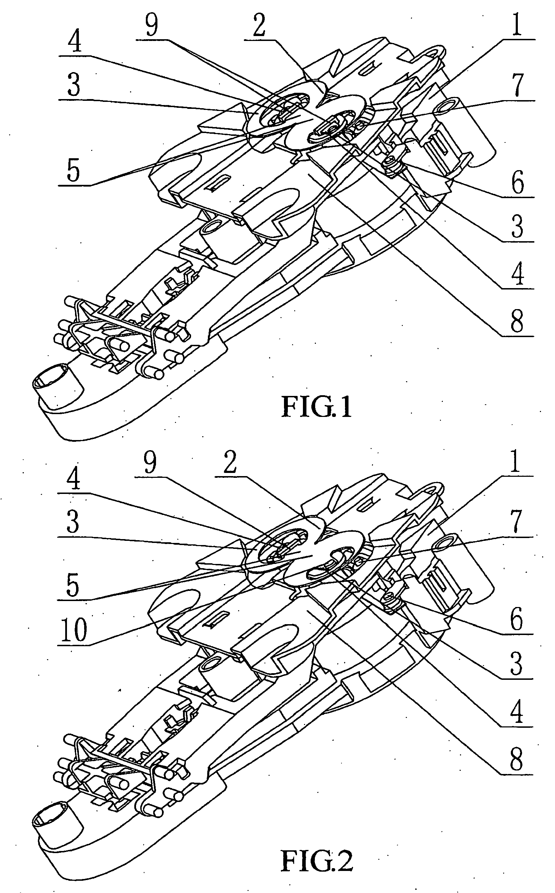

As shown in FIG. 1 and FIG. 2, the overheat protection controller assembly of a liquid heating vessel includes: a control body 1; a monolithic conjoined double-actuating thermal sensitive bimetal actuator 2 arranged on the upper surface of the control body 1, the monolithic conjoined double-actuating thermal sensitive bimetal actuator 2 is comprised of two conjoined actuating units which are formed of a bimetal sheet, each said actuating unit includes its own outer kick limb 3, internal tongue 4 and tongue root 5 that connects the outer kick limb 3 and the internal tongue 4, the two actuating units are adjacent to each other and conjoined at their tongue roots 5, the tongue tip of the internal tongue 4 and the outer kick limb 3 of one actuating unit are remote from those of the other actuating unit, the monolithic conjoined double-actuating thermal sensitive bimetal actuator 2 is mounted on the control body 1 via the internal tongues 4 of the actuating units, and the outer kick limb 3 of each said actuating unit will produce an actuation movement downwards on an overheat condition; and two groups of switch contacts 6 arranged on the control body, wherein each group of the switch contacts 6 cooperate with the outer kick limb 3 of a corresponding actuating unit, and a downward actuation movement of the outer kick limb 3 will open a corresponding group of the switch contacts 6 and cut off the power supply of the heater of the liquid heating vessel. In FIG. 1, the internal tongues 4 of the monolithic conjoined double-actuating thermal sensitive bimetal actuator 2 are mounted within the holes for internal tongues 9 in the retaining plate 8 of the control body 1; whereas, in FIG. 2, one internal tongue 4 of the monolithic conjoined double-actuating thermal sensitive bimetal actuator 2 is inserted into the hole for internal tongue 9 in the retaining plate 8 arranged on the upper surface of the control body 1, while the other internal tongue 4 is riveted to the retaining plate 8 arranged on the upper surface of the control body 1 via a rivet 10.

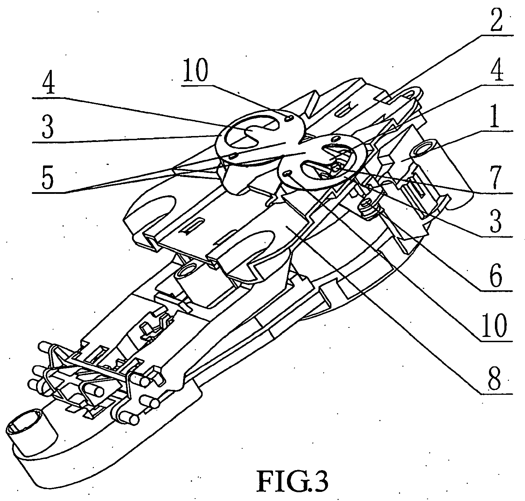

As shown in FIG. 3, the overheat protection controller assembly of a liquid heating vessel includes: a control body 1; a monolithic conjoined double-actuating thermal sensitive bimetal actuator 2 arranged on the upper surface of the control body 1, the monolithic conjoined double-actuating thermal sensitive bimetal actuator 2 is comprised of two conjoined actuating units which are formed of a bimetal sheet, each said actuating unit includes its own outer kick limb 3, internal tongue 4 and tongue root 5 that connects the outer kick limb 3 and the internal tongue 4, the outer kick limb 3 and the tongue root 5 of each said actuating unit forms the periphery of the actuating unit, the two actuating units are partially adjacent to each other and conjoined at their peripheries, the two actuating units are mounted on the control body 1 by means of their peripheries via rivets 10 , and the internal tongues 4 of the two actuating units will produce a downward actuation movement on an overheat condition; and two groups of switch contacts 6 arranged on the control body, each group of the switch contacts 6 cooperate with the internal tongue 4 of a corresponding actuating unit, and a downward actuation movement of the internal tongue 4 will open a corresponding group of the switch contacts 6 and cut off the power supply of the heater of the liquid heating vessel.

On the basis of the technical conception of the overheat protection controller assembly of a liquid heating vessel according to the present invention as illustrated in FIG. 1, FIG. 2 and FIG. 3 hereinbefore, two series of embodiments regarding the overheat protection controller assembly of a liquid heating vessel are formed.

The first series of embodiments are as follows.

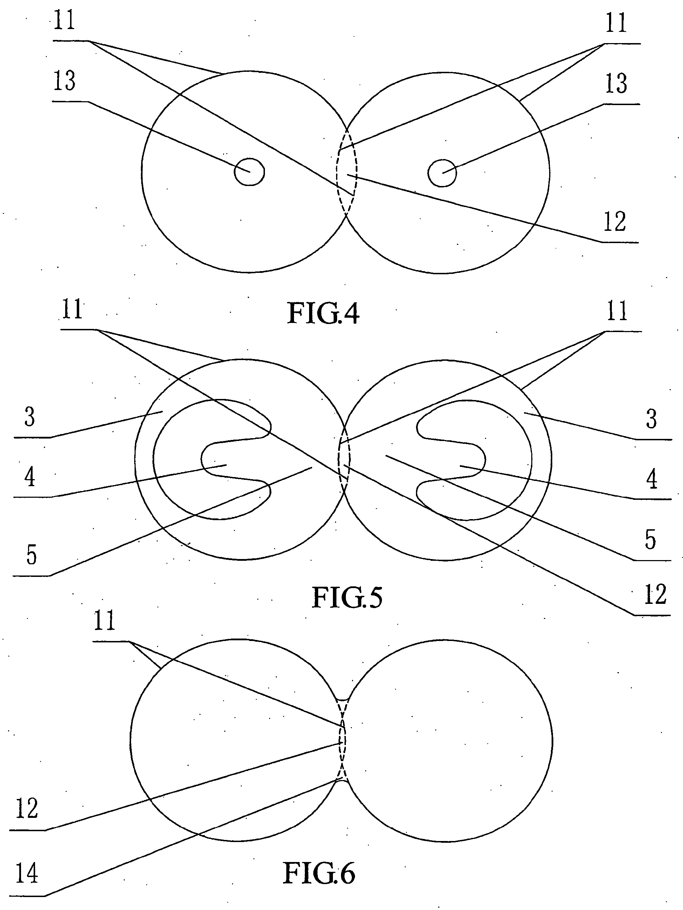

As shown in FIG. 1, FIG. 2, FIG. 4 and FIG. 5, an overheat protection controller assembly of a liquid heating vessel that can achieve the object of the present invention may be obtained by substituting the monolithic conjoined double-actuating thermal sensitive bimetal actuator 2 in FIG. 4 or FIG. 5 for the monolithic conjoined double-actuating thermal sensitive bimetal actuator 2 in FIG. 1 and FIG. 2. Such overheat protection controller assembly of a liquid heating vessel includes: a control body 1; a monolithic conjoined double-actuating thermal sensitive bimetal actuator 2 arranged on the upper surface of the control body 1, the monolithic conjoined double-actuating thermal sensitive bimetal actuator 2 is comprised of two conjoined actuating units which are formed of a bimetal sheet, each of the two actuating units which are adjacent to each other and conjoined has a closed outline perimeter 11 of the actuating unit, the bimetal sheet enclosed by each said actuating unit's closed outline perimeter 11 forms an actuating unit and has a relatively independent function of overheat actuation, each said actuating unit's closed outline perimeter 11 is partially located at the inner side of the other actuating unit's closed outline perimeter 11, the monolithic conjoined double-actuating thermal sensitive bimetal actuator 2 has a common join part 12 which is located at the inner side of each said actuating unit's closed outline perimeter 11 and effectively makes the two actuating units form the monolithic conjoined double-actuating thermal sensitive bimetal actuator 2, the monolithic conjoined double-actuating thermal sensitive bimetal actuator 2 is mounted on the control body 1 via a central mount point of each said actuating unit, the periphery of each said actuating unit kicks downwards to produce an actuation movement on an overheat condition; and two groups of switch contacts 6 arranged on the control body correspondingly, each group of the switch contacts 6 cooperate with the periphery of a corresponding actuating unit, and a downward actuation movement of the periphery of any of the actuating units will open a corresponding group of the switch contacts 6 and cut off the power supply of the heater of the liquid heating vessel. The central mount points of the actuating units in FIG. 4 and FIG. 5 may be connected to the control body 1 by riveting or in another connection manner. For the sake of a stable and reliable arrangement of the monolithic conjoined double-actuating thermal sensitive bimetal actuator 2 on the control body 1, generally a retaining plate 8 is first arranged on the upper surface of the control body 1, and the monolithic conjoined double-actuating thermal sensitive bimetal actuator 2 only needs be mounted on the retaining plate 8.

As shown in FIG. 5 and FIG. 1, an overheat protection controller assembly of a liquid heating vessel that makes it easier to achieve the object of the present invention may be obtained by substituting the monolithic conjoined double-actuating thermal sensitive bimetal actuator 2 in FIG. 5 for the monolithic conjoined double-actuating thermal sensitive bimetal actuator 2 in FIG. 1. Each actuating unit of the monolithic conjoined double-actuating thermal sensitive bimetal actuator 2 includes its own outer kick limb 3, internal tongue 4 and tongue root 5 that connects the outer kick limb 3 and the internal tongue 4, the two actuating units are adjacent to each other and conjoined at their tongue roots 5, the common join part 12 of the monolithic conjoined double-actuating thermal sensitive bimetal actuator 2 is located at the tongue root 5 at the inner side of each said actuating unit's closed outline perimeter 11, the tongue tip of the internal tongue 4 and the outer kick limb 3 of one actuating unit are remote from those of the other actuating unit, the outer kick limb 3 and the tongue root 5 of each said actuating unit forms the periphery of the actuating unit, the internal tongue 4 of each said actuating unit is surrounded by the outer kick limb 3 and the tongue root 5 of the actuating unit, the monolithic conjoined double-actuating thermal sensitive bimetal actuator 2 is mounted on the control body 1 via the internal tongues 4 of the actuating units, and a downward actuation movement of the outer kick limb 3 of any of the actuating units will open a corresponding group of the switch contacts 6, thereby resulting in an overheat protection. In this embodiment, a monolithic conjoined double-actuating thermal sensitive bimetal actuator 2 having internal tongues 4 and outer kick limbs 3 is adopted and the switch contacts 6 are controlled by the actuation movement of the outer kick limb 3. Thus, this embodiment is characterized by a long actuation stroke and a reliable overheat protection control. In this embodiment, when the orientations of the internal tongues 4 of the two actuating units of the monolithic conjoined double-actuating thermal sensitive bimetal actuator 2 form an angle of 180°, the two actuating units each have a better actuation independence.

As shown in FIG. 4 and FIG. 1, another overheat protection controller assembly of a liquid heating vessel that makes it easier to achieve the object of the present invention may be obtained by substituting the monolithic conjoined double-actuating thermal sensitive bimetal actuator 2 in FIG. 4 for the monolithic conjoined double-actuating thermal sensitive bimetal actuator 2 in FIG. 1. Each actuating unit of the monolithic conjoined double-actuating thermal sensitive bimetal actuator 2 is a sheet-like actuating unit, a mounting hole 13 is arranged in the geometric center of each said actuating unit, the monolithic conjoined double-actuating thermal sensitive bimetal actuator 2 is mounted on the control body 1 via the mounting holes 13 in the geometric centers of the actuating units, the common join part 12 of the monolithic conjoined double-actuating thermal sensitive bimetal actuator 2 is located between the mounting holes 13 of the two actuating units, and the peripheries of the two actuating units which are remote from the common join part 12 cooperate with the two groups of switch contacts 6, respectively. Because the actuating unit is a sheet-like actuating unit, this embodiment is characterized by a large actuation force and a reliable action of controlling the switch contacts 6.

In the above-mentioned series of embodiments, a push rod 7 may further be arranged between each group of the switch contacts 6 and the periphery of a corresponding actuating unit, a downward actuation movement of the periphery of the actuating unit pushes the push rod 7 to move, and the movement of the push rod 7 opens the switch contacts 6, so that an actuation movement of an actuating unit can travel a long distance to be transmitted to the switch contacts 6, and the switch contacts 6 are safely insulated from the actuating unit due to the insulating push rod 7.

As shown in FIG. 4 and FIG. 5, the two actuating units of the monolithic conjoined double-actuating thermal sensitive bimetal actuator 2 are symmetrical when they are placed laterally side by side, i.e. the two actuating units have the same shape and the same configuration, so that it can be better guaranteed that the two actuating units produce actuation movements at the same temperature, and it can be ensured that the two actuating units have the same actuation force, whereby the resultant overheat protection controller assembly of a liquid heating vessel can operate more reliably.

As shown in FIG. 6, when the join part joining the two actuating units, namely, the common join part 12, is too small, for the sake of a reliable joining between the two actuating units, a unit outer auxiliary connection part 14 is arranged between the adjacent edge lines of the two actuating units and near the common join part 12, and the unit outer auxiliary connection part 14 is located outside of the edge lines of the two actuating units and conjoins the two actuating units reliably to form a monolithic conjoined double-actuating thermal sensitive bimetal actuator 2, whereby the resultant overheat protection controller assembly of a liquid heating vessel can operate steadily.

Next is an introduction of the other series of embodiments.

As shown in FIG. 3, FIG. 4 and FIG. 5, an overheat protection controller assembly of a liquid heating vessel that also can achieve the object of the present invention may be obtained by substituting the monolithic conjoined double-actuating thermal sensitive bimetal actuator 2 in FIG. 4 or FIG. 5 for the monolithic conjoined double-actuating thermal sensitive bimetal actuator 2 in FIG. 3. Such overheat protection controller assembly of a liquid heating vessel includes: a control body 1; a monolithic conjoined double-actuating thermal sensitive bimetal actuator 2 arranged on the upper surface of the control body 1, the monolithic conjoined double-actuating thermal sensitive bimetal actuator 2 is comprised of two conjoined actuating units which are formed of a bimetal sheet, each of the two actuating units which are adjacent to each other and conjoined has a closed outline perimeter 11 of the actuating unit, the bimetal sheet enclosed by each said actuating unit's closed outline perimeter 11 forms an actuating unit and has a relatively independent function of overheat actuation, each said actuating unit's closed outline perimeter 11 is partially located at the inner side of the other actuating unit's closed outline perimeter 11, the monolithic conjoined double-actuating thermal sensitive bimetal actuator 2 has a common join part 12 which is located at the inner side of each said actuating unit's closed outline perimeter 11 and effectively makes the two actuating units form the monolithic conjoined double-actuating thermal sensitive bimetal actuator 2, the monolithic conjoined double-actuating thermal sensitive bimetal actuator 2 is mounted on the control body 1 via a peripheral mount point of each said actuating unit, the center of each said actuating unit kicks downwards to produce an actuation movement on an overheat condition; and two groups of switch contacts 6 arranged on the control body 1 correspondingly, each group of the switch contacts 6 cooperate with the center of a corresponding actuating unit, and a downward actuation movement of the center of any of the actuating units will open a corresponding group of the switch contacts 6 and cut off the power supply of the heater of the liquid heating vessel. In this embodiment, the mounting holes 13 of the monolithic conjoined double-actuating thermal sensitive bimetal actuator 2 as shown in FIG. 4 may be omitted. Since one reliable property of the bimetal sheet material is that it produces an actuation movement when the environmental temperature is too high, when the peripheries of the actuating units are secured to the retaining plate on the upper surface of the control body 1 by riveting or in another connection manner, the center of an actuating unit will produces a downward actuation movement to open corresponding switch contacts 6 on an overheat condition.

As shown in FIG. 5 and FIG. 3, an overheat protection controller assembly of a liquid heating vessel that makes it easier to achieve the object of the present invention may be obtained by substituting the monolithic conjoined double-actuating thermal sensitive bimetal actuator 2 in FIG. 5 for the monolithic conjoined double-actuating thermal sensitive bimetal actuator 2 in FIG. 3. Each actuating unit of the monolithic conjoined double-actuating thermal sensitive bimetal actuator 2 includes its own outer kick limb 3, internal tongue 4 and tongue root 5 that connects the outer kick limb 3 and the internal tongue 4, the outer kick limb 3 and the tongue root 5 of each said actuating unit forms the periphery of the actuating unit, the two actuating units are partially adjacent to each other and conjoined at their peripheries, the common join part 12 of the monolithic conjoined double-actuating thermal sensitive bimetal actuator 2 is located at the peripheries at the inner side of the edge lines of the two actuating units, and the internal tongues 4 of the two actuating units will produce a downward actuation movement on an overheat condition, thereby resulting in an overheat protection. In this embodiment, a monolithic conjoined double-actuating thermal sensitive bimetal actuator 2 having internal tongues 4 and outer kick limbs 3 is adopted and the switch contacts 6 are controlled by the actuation movement of the internal tongue 4. Thus, this embodiment is characterized by a long actuation stroke.

As shown in FIG. 4 and FIG. 3, another overheat protection controller assembly of a liquid heating vessel that makes it easier to achieve the object of the present invention may be obtained by substituting the monolithic conjoined double-actuating thermal sensitive bimetal actuator 2 in FIG. 4 for the monolithic conjoined double-actuating thermal sensitive bimetal actuator 2 in FIG. 3. Each actuating unit of the monolithic conjoined double-actuating thermal sensitive bimetal actuator 2 is a sheet-like actuating unit, the common join part 12 of the monolithic conjoined double-actuating thermal sensitive bimetal actuator 2 is located between the geometric centers of the two actuating units, and the two groups of switch contacts 6 cooperate with the geometric centers of the two actuating units, respectively. In this embodiment, the mounting holes 13 shown in FIG. 4 may be omitted. Because the actuating unit is a sheet-like actuating unit, this embodiment is characterized by a large actuation force.

In the above-mentioned series of embodiments describing that the monolithic conjoined double-actuating thermal sensitive bimetal actuator 2 has a common join part 12 and the switch contacts 6 are opened by a downward actuation movement of the center of the actuating unit, a push rod 7 may further be arranged between each group of the switch contacts 6 and the center of a corresponding actuating unit, a downward actuation movement of the center of the actuating unit pushes the push rod 7 to move, and the movement of the push rod 7 opens the switch contacts 6, so that an actuation movement of an actuating unity can travel a long distance to be transmitted to the switch contacts 6, and the switch contacts 6 are insulated from the actuating unit due to the insulating push rod 7.

## Claims

1. An overheat protection controller assembly of a liquid heating vessel, comprising:
a control body (1);
a monolithic conjoined double-actuating thermal sensitive bimetal actuator (2) arranged on the upper surface of the control body (1), the monolithic conjoined double-actuating thermal sensitive bimetal actuator (2) comprises two conjoined actuating units which are formed of a single piece of the same bimetal sheet, each of the two actuating units which are adjacent to each other and conjoined has a closed outline perimeter (11) of the actuating unit, the bimetal sheet enclosed by each said actuating unit's outline perimeter (11) forms an actuating unit which has an independent function of overheat actuation, each said actuating unit's outline perimeter (11) intersects with the other actuating unit's outline perimeter (11),
the monolithic conjoined double-actuating thermal sensitive bimetal actuator (2) has a common join part (12) which is located at the intersection part of said two actuating units' outline perimeters (11) and effectively makes the two actuating units form the monolithic conjoined double-actuating thermal sensitive bimetal actuator (2), the monolithic conjoined double-actuating thermal sensitive bimetal actuator (2) is mounted on the control body (1) via a central mount point of each said actuating unit, the periphery of each said actuating unit is configured to be able to kick downwards to produce an actuation movement on an overheat condition; and
two groups of switch contacts (6) arranged on the control body correspondingly, wherein each group of the switch contacts (6) cooperates with the periphery of a corresponding actuating unit, wherein the actuating units are such configured that a downward actuation movement of the periphery of any of the actuating units will open a corresponding group of the switch contacts (6) and cut off the power supply of the heater of the liquid heating vessel.

2. The overheat protection controller assembly of a liquid heating vessel of claim 1, wherein each said actuating unit includes its own outer kick limb (3), internal tongue (4) and tongue root (5) that connects the outer kick limb (3) and the internal tongue (4), the two actuating units are adjacent to each other and conjoined at their tongue roots (5), the common join part (12) of the monolithic conjoined double-actuating thermal sensitive bimetal actuator (2) is located at the tongue root (5) at the intersection part of said two actuating units' outline perimeters (11), the tongue tip of the internal tongue (4) and the outer kick limb (3) of one actuating unit are remote from those of the other actuating unit, the outer kick limb (3) and the tongue root (5) of each said actuating unit forms the periphery of the actuating unit, the internal tongue (4) of each said actuating unit is surrounded by the outer kick limb (3) and the tongue root (5) of the actuating unit, the monolithic conjoined double-actuating thermal sensitive bimetal actuator (2) is mounted on the control body (1) via the internal tongues (4) of the actuating units, and a downward actuation movement of the outer kick limb (3) of any of the actuating units will open a corresponding group of the switch contacts (6).

3. The overheat protection controller assembly of a liquid heating vessel of claim 2, wherein the orientations of the internal tongues (4) of the two actuating units of the monolithic conjoined double-actuating thermal sensitive bimetal actuator (2) form an angle of 180°.

4. The overheat protection controller assembly of a liquid heating vessel of claim 1, wherein each said actuating unit is a sheet-like actuating unit, a mounting hole (13) is arranged in the geometric centre of each said actuating unit, the monolithic conjoined double-actuating thermal sensitive bimetal actuator (2) is mounted on the control body (1) via the mounting holes (13) in the geometric centres of the actuating units, the common join part (12) of the monolithic conjoined double-actuating thermal sensitive bimetal actuator (2) is located between the mounting holes (13) of the two actuating units, and the peripheries of the two actuating units which are remote from the common join part (12) cooperate with the two groups of switch contacts (6), respectively.

5. The overheat protection controller assembly of a liquid heating vessel of claim 1, wherein the two actuating units of the monolithic conjoined double-actuating thermal sensitive bimetal actuator (2) are symmetrical when they are placed laterally side by side.

6. The overheat protection controller assembly of a liquid heating vessel of claim 1, further comprising a unit outer auxiliary connection part (14) which is arranged between the adjacent outline perimeters of the two actuating units and near the common join part (12), and the unit outer auxiliary connection part (14) is located outside of the outline perimeters of the two actuating units and further conjoins the two actuating units to form the monolithic conjoined double-actuating thermal sensitive bimetal actuator (2).

7. The overheat protection controller assembly of a liquid heating vessel of any of claims 1 to 6, further comprising a push rod (7) which is arranged between each group of the switch contacts (6) and the periphery of a corresponding actuating unit, a downward actuation movement of the periphery of the actuating unit pushes the push rod (7) to move, and the movement of the push rod (7) opens the switch contacts (6).

8. An overheat protection controller assembly of a liquid heating vessel, comprising:
a control body (1);
a monolithic conjoined double-actuating thermal sensitive bimetal actuator (2) arranged on the upper surface of the control body (1), the monolithic conjoined double-actuating thermal sensitive bimetal actuator (2) comprises two conjoined actuating units which are formed of a single piece of the same bimetal sheet, each of the two actuating units which are adjacent to each other and conjoined has a closed outline perimeter (11) of the actuating unit, the bimetal sheet enclosed by each said actuating unit's outline perimeter (11) forms an actuating unit which has an independent function of overheat actuation, each said actuating unit's outline perimeter (11) intersects with the other actuating unit's outline perimeter (11),
the monolithic conjoined double-actuating thermal sensitive bimetal actuator (2) has a common join part (12) which is located at the intersection part of said two actuating units' outline perimeters (11) and effectively makes the two actuating units form the monolithic conjoined double-actuating thermal sensitive bimetal actuator (2), the monolithic conjoined double-actuating thermal sensitive bimetal actuator (2) is mounted on the control body (1) via a peripheral mount point of each said actuating unit, the centre of each said actuating unit is configured to be able to kick downwards to produce an actuation movement on an overheat condition; and
two groups of switch contacts (6) arranged on the control body (1) correspondingly, wherein each group of the switch contacts (6) cooperates with the centre of a corresponding actuating unit, wherein the actuating units are such configured that a downward actuation movement of the centre of any of the actuating units will open a corresponding group of the switch contacts (6) and cut off the power supply of the heater of the liquid heating vessel.

9. The overheat protection controller assembly of a liquid heating vessel of claim 8, wherein each said actuating unit includes its own outer kick limb (3), internal tongue (4) and tongue root (5) that connects the outer kick limb (3) and the internal tongue (4), the outer kick limb (3) and the tongue root (5) of each said actuating unit forms the periphery of the actuating unit, the two actuating units are partially adjacent to each other and conjoined at their peripheries, the common join part (12) of the monolithic conjoined double-actuating thermal sensitive bimetal actuator (2) is located at the peripheries at the intersection part of the outline perimeters of the two actuating units, and the internal tongues (4) of the two actuating units will produce a downward actuation movement on an overheat condition.

10. The overheat protection controller assembly of a liquid heating vessel of claim 8, wherein each said actuating unit is a sheet-like actuating unit, the common join part (12) of the monolithic conjoined double-actuating thermal sensitive bimetal actuator (2) is located between the geometric centres of the two actuating units, and the two groups of switch contacts (6) cooperate with the geometric centres of the two actuating units, respectively.

11. The overheat protection controller assembly of a liquid heating vessel of any of claims 8 to 10, further comprising a push rod (7) which is arranged between each group of the switch contacts (6) and the centre of a corresponding actuating unit, a downward actuation movement of the centre of the actuating unit pushes the push rod (7) to move, and the movement of the push rod (7) opens the switch contacts (6).

## Patentansprüche

1. Controller-Anordnung zum Schutz gegen Überhitzung eines Flüssigkeitserhitzungsbehälters, umfassend:
einen Kontrollkörper (1);
einen monolithischen verbundenen thermisch empfindlichen Doppelbetätigungs-Bimetall-Aktuator (2), der auf der oberen Oberfläche des Kontrollkörpers (1) angeordnet ist, wobei der monolithische verbundene thermisch empfindliche Doppelbetätigungs-Bimetall-Aktuator (2) zwei verbundene Betätigungseinheiten aufweist, die einstückig aus dem selben Bimetall-Blech gebildet sind, jede der einander angrenzenden und verbundenen beiden Betätigungseinheiten einen geschlossenen Umrissumfang (11) der Betätigungseinheit aufweist, das von dem besagten Umrissumfang der Betätigungseinheit (11) umschlossene Bimetall-Blech eine Betätigungseinheit bildet, die eine unabhängige Betätigungsfunktion bei Überhitzung, sich jeder der Umrissumfänge (11) der Betätigungseinheiten mit dem Umrissumfang (11) der anderen Betätigungseinheit überschneidet, der monolithische verbundene thermisch empfindliche Doppelbetätigungs-Bimetall-Aktuator (2) einen gemeinsamen Verbindungsteil (12) aufweist, der am Überschneidungsteil der Umrissumfänge (11) der beiden Betätigungseinheiten befindet und effektiv die beiden Betätigungseinheiten dazu bringt, den monolithischen verbundenen thermisch empfindlichen Doppelbetätigungs-Bimetall-Aktuator (2) zu bilden, der monolithische verbundene thermisch empfindliche Doppelbetätigungs-Bimetall-Aktuator (2) auf dem Kontrollkörper (1) über einen zentralen Montagepunkt der besagten Betätigungseinheit montiert ist, die Peripherie einer jeden Betätigungseinheit derart konfiguriert ist, dass sie nach unten treten kann, um eine Betätigungsbewegung in einem Überhitzungszustand herzustellen; und
zwei Gruppen von Schaltkontakten (6), die dementsprechend auf dem Kontrollkörper angeordnet sind, wobei jede Gruppe von Schaltkontakten (6) mit der Peripherie einer entsprechenden Betätigungseinheit zusammenwirkt, wobei die Betätigungseinheiten so konfiguriert sind, dass eine Betätigungsbewegung nach unten der Peripherie einer beliebigen Betätigungseinheit eine entsprechende Gruppe von Schaltkontakten (6) öffnet und die Stromversorgung der Heizvorrichtung des Flüssigkeitserhitzungsbehälters kappt.

2. Controller-Anordnung zum Schutz gegen Überhitzung eines Flüssigkeitserhitzungsbehälters nach Anspruch 1, wobei jede Betätigungseinheit das eigene äußere Tretglied (3), die interne Feder (4) und Federwurzel (5), welche das äußere Tretglied (3) und die interne Feder (4) verbindet, umfasst, wobei die zwei Betätigungseinheiten aneinander angrenzend und an ihren Federwurzeln (5) verbunden sind, der gemeinsame Verbindungsteil (12) an der Federwurzel (5) am Überschneidungsteil der Umrissumfänge (11) der beiden Betätigungseinheiten gelegen ist, die Federspitze der internen Feder (4) und das äußere Tretglied (3) einer Betätigungseinheit in einem Abstand von denjenigen der anderen Betätigungseinheit sind, das äußere Tretglied (3) und die Federwurzel (5) der jeweiligen Betätigungseinheit die Peripherie der Betätigungseinheit bilden, die interne Feder (4) jeder Betätigungseinheit von dem äußeren Tretglied (3) und der Federwurzel (5) der Betätigungseinheit umgeben ist, der monolithische verbundene thermisch empfindliche Doppelbetätigungs-Bimetall-Aktuator (2) auf dem Kontrollkörper (1) über die internen Federn (4) der Betätigungseinheit montiert ist, und eine Betätigungsbewegung nach unten des äußeren Tretglieds (3) einer der Betätigungseinheiten eine korrespondierende Gruppe von Schaltkontakten (6) öffnen wird.

3. Controller-Anordnung zum Schutz gegen Überhitzung eines Flüssigkeitserhitzungsbehälters nach Anspruch 2, wobei die Ausrichtungen der internen Federn (4) der zwei Betätigungseinheiten des monolithischen verbundenen thermisch empfindlichen Doppelbetätigungs-Bimetall-Aktuators (2) einen Winkel von 180° bilden.

4. Controller-Anordnung zum Schutz gegen Überhitzung eines Flüssigkeitserhitzungsbehälters nach Anspruch 1, wobei jede Betätigungseinheit eine Blech-ähnliche Betätigungseinheit ist, ein Montageloch (13) im geometrischen Zentrum jeder Betätigungseinheit angeordnet ist, der monolithische verbundene thermisch empfindliche Doppelbetätigungs-Bimetall-Aktuator (2) auf dem Kontrollkörper (1) über die Montagelöcher (13) in den geometrischen Zentren der Betätigungseinheiten montiert ist, der gemeinsame Verbindungsteil (12) des monolithischen verbundenen thermisch empfindlichen Doppelbetätigungs-Bimetall-Aktuators (2) zwischen den Montagelöchern (13) der zwei Betätigungseinheiten gelegen ist, und die Peripherien der zwei Betätigungseinheiten, die sich in einem Abstand von dem gemeinsamen Verbindungsteil (12) befinden, jeweils mit den zwei Gruppen von Schaltkontakten (6) zusammenwirken.

5. Controller-Anordnung zum Schutz gegen Überhitzung eines Flüssigkeitserhitzungsbehälters nach Anspruch 1, wobei die zwei Betätigungseinheiten des monolithischen verbundenen thermisch empfindlichen Doppelbetätigungs-Bimetall-Aktuators (2) symmetrisch sind, wenn sie seitlich nebeneinander platziert sind.

6. Controller-Anordnung zum Schutz gegen Überhitzung eines Flüssigkeitserhitzungsbehälters nach Anspruch 1, weiterhin umfassend eine außerhalb der Einheit angeordnete Hilfs-Verbindungsteil (14), der zwischen den benachbarten Außenumfängen der beiden Betätigungseinheiten und in der Nähe des gemeinsamen Verbindungsteils (12) angeordnet ist, und wobei der außerhalb der Einheit angeordnete Hilfs-Verbindungsteil (14) außerhalb der Außenumfänge der beiden Betätigungseinheiten gelegen ist und die beiden Betätigungseinheiten weiter verbindet, um den monolithischen verbundenen thermisch empfindlichen Doppelbetätigungs-Bimetall-Aktuator (2) zu bilden.

7. Controller-Anordnung zum Schutz gegen Überhitzung eines Flüssigkeitserhitzungsbehälters nach einem der Ansprüche 1 bis 6, weiterhin umfassend eine Schubstange (7), welche zwischen jeder Gruppe von Schaltkontakten (6) und der Peripherie einer korrespondierenden Betätigungseinheit angeordnet ist, eine Betätigungsbewegung nach unten der Peripherie der Betätigungseinheit die Schubstange (7) in Bewegung schiebt, und die Bewegung der Schubstange (7) die Schaltkontakte (6) öffnet.

8. Controller-Anordnung zum Schutz gegen Überhitzung eines Flüssigkeitserhitzungsbehälters, umfassend:
einen Kontrollkörper (1);
einen monolithischen verbundenen thermisch empfindlichen Doppelbetätigungs-Bimetall-Aktuator (2), der auf der Oberfläche des Kontrollkörpers (1) angeordnet ist, wobei der monolithische verbundene thermisch empfindliche Doppelbetätigungs-Bimetall-Aktuator (2) zwei verbundene Betätigungseinheiten aufweist, die einstückig aus dem selben Bimetall-Blechs gebildet sind, jede der einander angrenzenden und verbundenen beiden Betätigungseinheiten einen geschlossenen Umrissumfang (11) der Betätigungseinheit aufweist, das von dem besagten Umrissumfang der Betätigungseinheit (11) umschlossene Bimetall-Blech eine Betätigungseinheit bildet, die eine unabhängige Betätigungsfunktion bei Überhitzung, sich jeder der Umrissumfänge (11) der Betätigungseinheiten mit dem Umrissumfang (11) der anderen Betätigungseinheit überschneidet, der monolithische verbundene thermisch empfindliche Doppelbetätigungs-Bimetall-Aktuator (2) einen gemeinsamen Verbindungsteil (12) aufweist, der am Überschneidungsteil der Umrissumfänge (11) der beiden Betätigungseinheiten befindet und effektiv die beiden Betätigungseinheiten dazu bringt, den monolithischen verbundenen thermisch empfindlichen Doppelbetätigungs-Bimetall-Aktuator (2) zu bilden, der monolithische verbundene thermisch empfindliche Doppelbetätigungs-Bimetall-Aktuator (2) auf dem Kontrollkörper (1) über einen peripheren Montagepunkt der besagten Betätigungseinheit montiert ist, das Zentrum einer jeden Betätigungseinheit derart konfiguriert ist, dass sie nach unten treten kann, um eine Betätigungsbewegung in einem Überhitzungszustand herzustellen; und
zwei Gruppen von Schaltkontakten (6), die dementsprechend auf dem Kontrollkörper (1) angeordnet sind, wobei jede Gruppe von Schaltkontakten (6) mit dem Zentrum einer entsprechenden Betätigungseinheit zusammenwirkt, wobei die Betätigungseinheiten so konfiguriert sind, dass eine Betätigungsbewegung nach unten des Zentrums einer beliebigen Betätigungseinheit eine entsprechende Gruppe von Schaltkontakten (6) öffnet und die Stromversorgung der Heizvorrichtung des Flüssigkeitserhitzungsbehälters kappt.

9. Controller-Anordnung zum Schutz gegen Überhitzung eines Flüssigkeitserhitzungsbehälters nach Anspruch 8, wobei jede Betätigungseinheit das eigene äußere Tretglied (3), die interne Feder (4) und Federwurzel (5), welche das äußere Tretglied (3) und die interne Feder (4) verbindet, umfasst, das äußere Tretglied (3) und die Federwurzel (5) der jeweiligen Betätigungseinheit die Peripherie der Betätigungseinheit bilden, die zwei Betätigungseinheiten teilweise aneinander angrenzend und an ihren Peripherien verbunden sind, der gemeinsame Verbindungsteil (12) des monolithischen verbundenen thermisch empfindlichen Doppelbetätigungs-Bimetall-Aktuators (2) an den Peripherien am Überschneidungsteil der Außenumfänge der zwei Betätigungseinheiten gelegen ist, und die internen Federn (4) der zwei Betätigungseinheiten eine Betätigungsbewegung nach unten in einem Überhitzungszustand herstellen wird.

10. Controller-Anordnung zum Schutz gegen Überhitzung eines Flüssigkeitserhitzungsbehälters nach Anspruch 8, wobei jede Betätigungseinheit eine Blech-ähnliche Betätigungseinheit ist, der gemeinsame Verbindungsteil (12) des monolithischen verbundenen thermisch empfindlichen Doppelbetätigungs-Bimetall-Aktuators (2) zwischen den geometrischen Zentren der zwei Betätigungseinheiten gelegen ist, und die zwei Gruppen von Schaltkontakten (6) jeweils mit den geometrischen Zentren der zwei Betätigungseinheiten zusammenwirken.

11. Controller-Anordnung zum Schutz gegen Überhitzung eines Flüssigkeitserhitzungsbehälters nach einem der Ansprüche 8 bis 10, weiterhin umfassend eine Schubstange (7), welche zwischen jeder Gruppe von Schaltkontakten (6) und dem Zentrum einer korrespondierenden Betätigungseinheit angeordnet ist, eine Betätigungsbewegung nach unten des Zentrums der Betätigungseinheit die Schubstange (7) in Bewegung schiebt, und die Bewegung der Schubstange (7) die Schaltkontakte (6) öffnet.

## Revendications

1. Unité de contrôle de protection contre la surchauffe d'un récipient de chauffage de liquide, comprenant :
un corps de contrôle (1) ;
un actionneur bimétallique thermosensible à double action monolithique relié (2) disposé sur la surface supérieure du corps de contrôle (1), l'actionneur bimétallique thermosensible à double action monolithique relié (2) comprenant deux unités d'actionnement reliées qui sont formées d'une seule pièce de la même tôle bimétallique, étant donné que chacune des deux unités d'actionnement adjacentes et reliées présente un périmètre de contour fermé (11) de l'unité d'actionnement, la tôle bimétallique enfermée par chacun desdits périmètres de contour (11) de l'unité forme une unité d'actionnement qui a un fonction indépendante d'actionnement en cas de surchauffe, chacun desdits périmètres de contour de l'unité d'actionnement fait intersection avec l'autre de l'unité d'actionnement, l'actionneur bimétallique thermosensible à double action monolithique relié (2) a une pièce de jonction commune (12) située à la pièce d'intersection desdits périmètres de contour (11) des deux unités d'actionnement et amène efficacement les deux unités d'actionnement à former l'actionneur bimétallique thermosensible à double action monolithique relié (2), l'actionneur bimétallique thermosensible à double action monolithique relié (2) est monté sur le corps de contrôle (1) via un point de montage central de chaque unité d'actionnement, la périphérie de chacune desdites unités d'actionnement est configurée de manière à pouvoir frapper vers le bas afin de produire un mouvement d'actionnement en état de surchauffe ; et
deux groupes de contacts de commutation (6) disposés en conséquence sur le corps de contrôle, où chaque groupe de contacts de commutation (6) coopère avec la périphérie d'une unité d'actionnement correspondante, étant donné que les unités d'actionnement sont configurées de manière ce qu'un mouvement d'actionnement vers le bas de la périphérie de n'importe laquelle des unités d'actionnement ouvre un groupe correspondant de contact de contacts de commutation (6) et coupe l'alimentation en énergie du radiateur de chauffage du récipient de chauffage de liquide.

2. Unité de contrôle de protection contre la surchauffe d'un récipient de chauffage de liquide selon la revendication 1, dans laquelle chaque unité d'actionnement comprend son propre membre de poussée extérieur (3), sa propre languette interne (4) et racine de languette (5) qui relie le membre de poussée extérieur (3) et la languette interne (4), les deux unités d'actionnement sont adjacentes et reliées à leurs racines de languettes (5), la pièce de jonction commune (12) de l'actionneur bimétallique thermosensible à double action monolithique relié (2) est située au niveau de la racine de languette (5) à la pièce d'intersection desdits périmètres de contour (11) des deux unités d'actionnement, la pointe de languette de la languette interne (4) et le membre de poussée extérieur (3) d'une unité d'actionnement sont à une distance de ceux de l'autre unité d'actionnement, le membre de poussée extérieur (3) et la racine de languette (5) de chaque unité d'actionnement forment la périphérie de l'unité d'actionnement, la languette interne (4) de chaque unité d'actionnement est entourée par le membre de poussée extérieur (3) et la racine de languette (5) de l'unité d'actionnement, l'actionneur bimétallique thermosensible à double action monolithique relié (2) est monté sur le corps de contrôle (1) via les languettes internes (4) des unités d'actionnement, et un mouvement d'actionnement vers le bas du membre de poussée extérieur (3) de n'importe laquelle des unités d'actionnement va ouvrir un groupe correspondant de contacts de commutation (6).

3. Unité de contrôle de protection contre la surchauffe d'un récipient de chauffage de liquide selon la revendication 2, dans laquelle les orientations de la languette interne (4) des deux unités d'actionnement de l'actionneur bimétallique thermosensible à double action monolithique relié (2) forment un angle de 180°.

4. Unité de contrôle de protection contre la surchauffe d'un récipient de chauffage de liquide selon la revendication 1, dans laquelle chaque unité d'actionnement est une unité d'actionnement en forme de feuille, un trou de montage (13) est disposé au centre géométrique de chaque unité d'actionnement, l'actionneur bimétallique thermosensible à double action monolithique relié (2) est monté sur le corps de contrôle (1) via les trous de montage (13) aux centres géométriques des unités d'actionnement, la pièce de jonction commune (12) de l'actionneur bimétallique thermosensible à double action monolithique relié (2) est située entre les trous de montage (13) des deux unités d'actionnement, et les périphéries des deux unités d'actionnement qui sont à une distance de la pièce de jonction commune (12) coopèrent respectivement avec les deux groupes de contacts de commutation (6).

5. Unité de contrôle de protection contre la surchauffe d'un récipient de chauffage de liquide selon la revendication 1, dans laquelle les deux unités d'actionnement de l'actionneur bimétallique thermosensible à double action monolithique relié (2) sont symétriques lorsqu'elles sont placées latéralement l'une à côté de l'autre.

6. Unité de contrôle de protection contre la surchauffe d'un récipient de chauffage de liquide selon la revendication 1, comprenant en outre une pièce de connexion auxiliaire extérieure à l'unité (14) disposée entre les périmètres de contour adjacents des deux unités d'actionnement et à proximité de la pièce de jonction commune (12), et où la pièce de connexion auxiliaire extérieure à l'unité (14) est située hors des périmètres de contour des deux unités d'actionnement et relie les deux unités d'actionnement pour former l'actionneur bimétallique thermosensible à double action monolithique relié (2).

7. Unité de contrôle de protection contre la surchauffe d'un récipient de chauffage de liquide selon l'une quelconque des revendications 1 à 6, comprenant en outre une tige de poussée (7) disposée entre chaque groupe de contacts de commutation (6) et la périphérie d'une unité d'actionnement correspondante, un mouvement d'actionnement vers le bas de la périphérie de l'unité d'actionnement pousse la tige de poussée (7), l'amenant à se déplacer, et le mouvement de la tige de poussée (7) ouvre les contacts de commutation (6).

8. Unité de contrôle de protection contre la surchauffe d'un récipient de chauffage de liquide, comprenant :
un corps de contrôle (1) ;
un actionneur bimétallique thermosensible à double action monolithique relié (2) disposé sur la surface supérieure du corps de contrôle (1), l'actionneur bimétallique thermosensible à double action monolithique relié (2) comprenant deux unités d'actionnement reliées qui sont formées d'une seule pièce de la même tôle bimétallique, étant donné que chacune des deux unités d'actionnement adjacentes et reliées présente un périmètre de contour fermé (11) de l'unité d'actionnement, la tôle bimétallique enfermée par chacun desdits périmètres de contour (11) de l'unité forme une unité d'actionnement qui a un fonction indépendante d'actionnement en cas de surchauffe, chacun desdits périmètres de contour de l'unité d'actionnement fait intersection avec l'autre de l'unité d'actionnement, l'actionneur bimétallique thermosensible à double action monolithique relié (2) a une pièce de jonction commune (12) située à la pièce d'intersection desdits périmètres de contour (11) des deux unités d'actionnement et amène efficacement les deux unités d'actionnement à former l'actionneur bimétallique thermosensible à double action monolithique relié (2), l'actionneur bimétallique thermosensible à double action monolithique relié (2) est monté sur le corps de contrôle (1) via un point de montage périphérique de chaque unité d'actionnement, le centre de chacune desdites unités d'actionnement est configuré de manière à pouvoir frapper vers le bas afin de produire un mouvement d'actionnement en état de surchauffe ; et
deux groupes de contacts de commutation (6) disposés en conséquence sur le corps de contrôle (1), où chaque groupe de contacts de commutation (6) coopère avec le centre d'une unité d'actionnement correspondante, étant donné que les unités d'actionnement sont configurées de manière ce qu'un mouvement d'actionnement vers le bas du centre de n'importe laquelle des unités d'actionnement ouvre un groupe correspondant de contact de contacts de commutation (6) et coupe l'alimentation en énergie du radiateur de chauffage du récipient de chauffage de liquide.

9. Unité de contrôle de protection contre la surchauffe d'un récipient de chauffage de liquide selon la revendication 8, dans laquelle chaque unité d'actionnement comprend son propre membre de poussée extérieur (3), sa propre languette interne (4) et racine de languette (5) qui relie le membre de poussée extérieur (3) et la languette interne (4), le membre de poussée extérieur (3) et la racine de languette (5) de chaque unité d'actionnement forment la périphérie de l'unité d'actionnement, les deux unités d'actionnement sont partiellement adjacentes l'une à l'autre et reliées au niveau de leurs périphéries, la partie de jonction commune (12) de l'actionneur bimétallique thermosensible à double action monolithique relié (2) est située aux périphéries à la partie d'intersection des périmètres de contour des deux unités d'actionnement, et les languettes internes (4) des deux unités d'actionnement vont produire un mouvement d'actionnement vers le bas en état de surchauffe.

10. Unité de contrôle de protection contre la surchauffe d'un récipient de chauffage de liquide selon la revendication 8, dans laquelle chaque unité d'actionnement est une unité d'actionnement en forme de feuille, la pièce de jonction commune (12) de l'actionneur bimétallique thermosensible à double action monolithique relié (2) est située entre les centres géométriques de deux unités d'actionnement, et les deux groupes de contacts de commutation (6) coopèrent respectivement avec les centres géométriques des deux unités d'actionnement.

11. Unité de contrôle de protection contre la surchauffe d'un récipient de chauffage de liquide selon l'une quelconque des revendications 8 à 10, comprenant en outre une tige de poussée (7) disposée entre chaque groupe de contacts de commutation (6) et le centre d'une unité d'actionnement correspondante, un mouvement d'actionnement vers le bas du centre de l'unité d'actionnement pousse la tige de poussée (7), l'amenant à se déplacer, et le mouvement de la tige de poussée (7) ouvre les contacts de commutation (6).
